# EUROPEAN PATENT APPLICATION

(11) **EP 4 438 329 A1**
(43) Date of publication of application: **02.10.2024**
(21) Application number: 24166636.1
(22) Date of filing: 27.03.2024
(51) Int. Cl.: B60C 1/00, C08L 7/00, C08K 3/04, C08K 3/36, C08L 9/00, C08K 5/09, C08K 3/22

(54) **RUBBER COMPOSITION INCORPORATING A PREFORMED NATURAL RUBBER-CARBON BLACK COMPOSITE MATERIAL**

(30) Priority: 29.03.2023 US 202318127763
(71) Applicant: The Goodyear Tire & Rubber Company, Akron, OH 44316 (US)
(72) Inventor: LOPEZ GAXIOLA, Daniel, Tallmadge, OH 44278 (US); SCHMIDT, Ryan Michael, Wadsworth, 44281 (US)
(74) Representative: Kutsch, Bernd

(57) **Abstract**

A rubber composition is disclosed comprising: at least 20 phr of a composite material comprising a reinforcing carbon black dispersed in natural rubber; at least 3 phr or at least 5 phr of a conjugated diene elastomer, the composite material and the conjugated diene elastomer together providing at least 90 phr or a total of 100 phr of vulcanizable elastomers in the rubber composition; a cure activator; and a sulfur-based cure agent. Also, a method of forming a rubber composition is disclosed, the method comprising the steps of: providing at least 20 phr of a composite material comprising a reinforcing carbon black dispersed in natural rubber and at least 3 phr or at least 5 phr of a conjugated diene elastomer, and blending said composite material and said conjugated diene elastomer at a temperature of at least 115°C to form a mixture, the mixture optionally further comprising silica; and thereafter, blending the mixture with a sulfur-based cure agent; the composite material and the conjugated diene elastomer together providing at least 90 phr or a total of 100 phr of vulcanizable elastomers in the mixture.

## Description

### BACKGROUND

Aspects of the exemplary embodiment relate to compositions suitable for use in a variety of tire components, such as in a tire tread, base, and in wire coatings and in particular, to compositions incorporating a preformed natural rubber-carbon black composite in addition to natural rubber in conventional form.

Tire treads are commonly formed from natural rubber or other elastomers which are blended with various additives, such as fillers and curing aids, prior to adding a sulfur-based curing agent, such as elemental sulfur. Such compounding ingredients are often selected to improve performance indicators related to tread wear and tire mileage. Often, there is a tradeoff between improvements in tread wear and mileage and other parameters, such as tear and rolling resistance.

U.S. Pat. No. 8,536,262B2 describes an internal tread rubber layer of a tire formed from a rubber including a minor amount of syndiotactic-1,2-polybutadiene and a major amount of at least one of a polymer or copolymer of isoprene and/or 1,3-butadiene and a copolymer of styrene and isoprene and/or 1,3-butadiene. The composition further includes a blend of rubber reinforcing carbon black fillers having iodine absorption values (ASTM D2515) of 20 to 50 g/kg and 100 to 300 g/kg, respectively. The internal tread rubber layer is positioned between the tire cap and the carcass, and is designed to promote tire handling while substantially maintaining the rubber's hysteresis property, reducing a tendency for internal heat buildup during the tire's service. While beneficial, the addition of an extra tread layer can increase the cost or time to construct the tire.

Recently, elastomeric composite materials, which contain natural rubber latex and carbon black, have been developed for use in tire compositions, as described, for example, in U.S. Pat. Nos. 9,156,955B2 and 10,767,028B2. The composites can be compounded with a curing agent and other additives to yield a composition suited to forming a tire tread, for example. However, such composites tend to provide a limited range of properties.

There remains a need for rubber compositions formed from composites that can maintain rolling resistance and tear properties of tires formed from the cured compositions without unduly impacting tread wear.

### SUMMARY OF THE INVENTION

The invention relates to a rubber composition in accordance with claim 1, to an article in accordance with claims 12, and to a method in accordance with claim 14.

Dependent claims refer to preferred embodiments of the invention.

In accordance with one aspect of the exemplary embodiment, a rubber composition includes at least 20 phr of a composite material, at least 3 phr of a conjugated diene elastomer, a cure activator, and a sulfur-based cure agent. The composite material includes a reinforcing carbon black dispersed in natural rubber. The composite material and conjugated diene elastomer together provide at least 90 phr of vulcanizable elastomers in the rubber composition.

The composite material including the reinforcing carbon black dispersed in natural rubber is thus a preformed composite material for being mixed with the other ingredients of the rubber composition.

The rubber composition may further include a reinforcing filler other than carbon black. The reinforcing filler may include silica. The rubber composition may include at least 5 phr, or at least 8 phr of silica, or up to 30 phr, or up to 18 phr of silica.

The composite material may provide the rubber composition with at least 20 phr of the reinforcing carbon black, or at least 30 phr, or up to 80 phr, or up to 55 phr of the reinforcing carbon black. The composite material may provide the rubber composition with at least 50 phr of the natural rubber, or at least 70 phr, or up to 95 phr, or up to 90 phr of the natural rubber. The composite material may be a solid at 21 °C and atmospheric pressure.

The conjugated diene elastomer may include at least one of natural rubber and synthetic polyisoprene. The rubber composition may include at least 5 phr of the conjugated diene elastomer, or at least 10 phr, or up to 50 phr, or up to 30 phr of the conjugated diene elastomer.

The cure activator may be selected from the group consisting of fatty acids, zinc oxide, and mixtures thereof.

The rubber composition may further include at least 0.1 phr of at least one processing aid selected from the group consisting of a resin, an oil, and mixtures thereof.

The rubber composition may further include at least 1 phr of at least one of an antioxidant and an antiozonant, and/or at least 0.5 phr of a cure accelerator, and/or at least 0.05 phr of a cure retardant.

The composite material and conjugated diene elastomer may together provide at least 98 phr of the vulcanizable elastomers in the rubber composition.

In another aspect of the exemplary embodiment, an article is formed from the rubber composition in any of the aspects described above. The article may include a tire tread.

In another aspect of the exemplary embodiment, a method of forming a rubber composition includes blending a composite material with a conjugated diene elastomer at a temperature of at least 115°C to form a mixture. The composite material includes a reinforcing carbon black dispersed in natural rubber. The composite material and conjugated diene elastomer together provide at least 90 phr of a total of 100 phr of vulcanizable elastomers. The mixture is blended with a sulfur-based cure agent to form the rubber composition.

In the method, the mixture may further include silica.

The method may further include curing the rubber composition to form a shaped article.

### DETAILED DESCRIPTION OF PREFERRED EMBODIMENTS OF THE INVENTION

Aspects of the exemplary embodiment relate to a rubber composition suited to use in forming a molded or extruded article, and to an article formed from the composition, such as a tire tread. The composition includes a preformed composite material, a conjugated diene-based elastomer, a reinforcing filler, such as silica, a sulfur-based curing agent, and optionally one or more of processing aids, such as oils and waxes, coupling agents, antioxidants, antiozonants, other components of a sulfur based cure package, such as cure activators, cure accelerators, and cure retardants, and other additives known in the art.

The exemplary composite material includes natural rubber and carbon black as the primary components. The combination of the composite material and the separate conjugated diene-based rubber results in a cured rubber composition with a multiphase morphology, in which carbon black is heterogeneously dispersed in the rubber composition, which provides good rolling resistance and tear properties of tires without unduly impacting tread wear.

In the description of this invention, the term "phr" refers to parts of a respective material per 100 parts by weight of rubber, or elastomer. The term "phf" refers to parts per hundred filler, by weight. By convention, the uncured rubber employed in the sealant composition, totals 100 phr.

The terms "rubber" and "elastomer" may be used interchangeably unless otherwise indicated. The terms "cure" and "vulcanize" may be used interchangeably unless otherwise indicated.

As used herein, Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

The glass transition temperature (Tg) of an elastomer or elastomer composition, where referred to herein, represents the glass transition temperature(s) of the respective elastomer or elastomer composition in its uncured state or possibly a cured state in the case of an elastomer composition. Tg values referred to herein are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

Mn (number average molecular weight), Mw (weight average molecular weight) and Mz (z average molecular weight), where referred to, is determined together using gel permeation chromatography (GPC) according to ASTM 5296-11 using polystyrene calibration standards (for further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1).

### The composite material

The composite material includes natural rubber and a reinforcing carbon black, which is dispersed in the natural rubber. In one embodiment, natural rubber and carbon black together constitute at least 90 wt. % or at least 95 wt.%, or at least 98 wt. %, or up to 100 wt. % of the composite material.

In one embodiment, the composite material has a Mooney viscosity of no more than 100 M.U., or no more than 85 M.U., or at least 60 M.U. The composite material may be a solid or a pourable liquid at room temperature (21°C) and atmospheric pressure. In another embodiment, the composite material may be a solid material at room temperature, e.g., in the form of strips or crumbs.

The composite material is unvulcanized and free of sulfur-based curing agents and organoperoxide curing agents. The composite material may also be free of reinforcing fillers, other than carbon black, and free of cure accelerators, cure activators, and cure retardants, examples of which are mentioned below.

The composite material may be used in the rubber composition in an amount of at least 20 phr, or at least 30 phr, or at least 50 phr, or at least 80 phr or at least 100 phr, or up to 160 phr, or up to 150 phr, or up to 140 phr. The elastomer content (primarily, natural rubber) in the composite material contributes to the total 100 phr of elastomers in the rubber composition. Accordingly, the maximum phr of the composite material in the rubber composition is dependent, at least in part, on its rubber content. For example, the composite material may provide at least 10 phr, or at least 20 phr or at least 50 phr, or at least 60 phr, or at least 70 phr, or at least 80 phr, or up to 95 phr, or up to 90 phr of the total elastomers in the rubber composition.

The composite material may contribute at least 10 phr, or at least 15 phr, or at least 20 phr, or at least 30 phr, or at least 40 phr, or up to 80 phr, or up to 60 phr, or up to 50 phr of carbon black to the rubber composition.

A ratio of carbon black to natural rubber in the composite material, by weight, may be at least 20:80, or at least 30:70, or up to 50:50, or up to 40:60, such as 35:65.

The carbon black in the composite material may be a single reinforcing carbon black or may include two or more different types of carbon black.

Carbon blacks useful in the composite material may have a nitrogen surface area (NSA) of from 15 m²/g to 300 m²/g, or at least 40 m²/g, as determined according to ASTM D6556-21, "Standard Test Method for Carbon Black-Total and External Surface Area by Nitrogen Adsorption". Exemplary carbon blacks include ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products."

Mixtures of two or more forms of carbon black may be employed. One example of a composite material suited to use herein, which includes two types of carbon black is described in U.S. Pat. No. 10,767,028B2. Other composite materials with different carbon blacks are described in U.S. Pub. No. 20100071817 A1.

In one embodiment, the carbon black is pretreated prior to forming the composite material, e.g., with silicon. One example silicon-treated carbon black is available from Cabot Corporation as CRX^{™} 2000 ECOBLACK^{®}.

Exemplary composite materials which include carbon black and natural rubber are available from Cabot Corporation as Engineered Elastomer Composites (E2C^{™}), such as E2C^{™} DX9620 and E2C^{™} DX9640. E2C^{™} DX9620 has a Mooney Viscosity ML(1+4) at 100°C, of about 69 M.U., a 300% modulus of about 17.0 MPa, a tensile strength of about 29.8 MPa, an elongation at break of about 528 %, and a tan δ at 60°C of about 0.130. E2C^{™} DX9640 has a Mooney Viscosity of about 84 M.U., a 300% modulus of about 18.5 MPa, a tensile strength of about 30.1 MPa, an elongation at Break of about 473 %, and a tan δ at 60°C of about 0.15.

Where two or more forms of carbon are used, a first of the carbon blacks in the composite may have been thermally treated at a temperature between 1100° C and 1800° C to provide a more crystalline structure than the second carbon black. The partially crystallized first carbon black may have an OAN structure of 120 cm³/100 g to 200 cm³/100 g, as determined according to ASTM D2414-22, "Standard Test Method for Carbon Black-Oil Absorption Number (OAN)", and a Raman microcrystalline planar size (La) of from to 25 Å to 50 Å, as determined using the method of Gruber et al., "Raman Studies of Heat-Treated Carbon Blacks," Carbon, Vol. 32 (7), pp. 1377 1382 (1994).

In one specific embodiment, the carbon black has an external surface area, as measured by STSA, of at least 95 m²/g and a dibutyl phthalate adsorption of greater than 80 mL/100 g, and the composite material includes at least 65 phr of the carbon black. In another specific embodiment, the carbon black has a surface area of at least 75 m²/g as measured by STSA and a dibutyl phthalate adsorption of greater than 60 mL/100 g, and the composite material includes at least 70 phr of the carbon black. In another specific embodiment, the carbon black is present in the composite material in an amount satisfying L^-0.26*S+94, where L is the amount of the carbon black in the composite material in phr and S is the surface area of the carbon black in m²/g as measured by STSA. These and other suitable composite materials are described, for example, in U.S. Pub. No. 20150105491 A1.

While the composite material may consist essentially of carbon black and natural rubber (e.g., these two materials are at least 95 wt. % or at least 98 wt. %, or up to 100 wt.% of the composite material, in total), it is also contemplated that the composite material may include other components. For example, in one embodiment, from 2 to 25 wt. %, or up to 15 wt. %, or up to 8 wt.%, of the composite may be composed of other rubber-forming elastomers. These other elastomers may include other conjugated diene elastomers, such as synthetic cis-1,4-polyisoprene, polybutadienes, butadiene copolymers, isoprene copolymers, and mixtures of these elastomers. Suitable copolymers may be selected from the group consisting of butadiene/styrene copolymers, isoprene/butadiene copolymers, isoprene/styrene copolymers and isoprene/butadiene/styrene copolymers.

The composite material may be formed by mixing the carbon black with the natural rubber for a sufficient time at a suitable temperature (e.g., at least 100°C, or at least 120°C), to achieve a highly disperse mixture. In one embodiment, the carbon black is added to the natural rubber as a slurry and the mixture coagulated using a coagulant, such as an acid. Such a method is described in U.S. Pat. No. 9, 156,955 B2. The slurry can be formed by mixing carbon black and water, which can be ground to improve dispersion, as described, for example, in U.S. Pub. No. 20150105491 A1.

### The Conjugated Diene-Based Elastomer

The conjugated diene-based elastomer (which does not form a part of the composite material) may be present in the rubber composition in an amount of at least 3 phr, or at least 5 phr, or at least 6 phr, or at least 8 phr, or at least 10 phr, or at least 12 phr, and/or up to 90 phr, or up to 80 phr, or up to 60 phr, or up to 40 phr, or up to 30 phr, or up to 20 phr, or up to 16 phr, such as in a range of 10 to 30 phr.

In one embodiment, a ratio by weight of the conjugated diene-based elastomer to the natural rubber present in the composite material is at least 5:95, or at least 6:94, or at least 10:90, or at least 12:88, or up to 30:70, or up to 25:75, or up to 20:80.

The conjugated diene-based elastomer consists of one or more elastomers derived solely, or predominantly (e.g., at least 60 wt. %, or at least 90 wt. %, or at least 95 wt. %), from a conjugated diene. For example, the conjugated diene-based elastomer may be selected from natural rubber, synthetic polyisoprene, polybutadiene, and mixtures and copolymers thereof. These elastomers all include a double bond in each monomer unit.

Natural rubber is derived predominantly from isoprene (2-methyl-1,3-butadiene) and thus is predominantly (e.g., at least 99 wt.%) polyisoprene. As used herein, the term "natural rubber" means naturally-occurring rubber, such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber produced from field grade coagulum (cuplump) from the Hevea brasiliensis tree is a common form of natural rubber. For example, technically specified or block rubber (TSR), is a natural rubber available from Indonesia, where it may be referred to as Standard Indonesian Rubber (SIR), Malaysia (as SMR), and Thailand (as STR). It can be obtained in a number of grades, including TSR 10 and TSR 20, with the TSR 10 grade being of higher purity.

In one embodiment, the conjugated diene-based elastomer is at least 60 wt. % natural rubber, or at least 80 wt. %, or at least 90 wt. %, or at least 95 wt. %, or up to 100 wt. % natural rubber.

In some embodiments, synthetic polyisoprene, in particular, cis-1,4-polyisoprene with a cis content of at least 94 wt. %, or at least 96 wt. %, may be used in the conjugated diene-based elastomer. The Tg of the synthetic polyisoprene may be in a range of -60°C to -70°C. In one embodiment, a mixture of synthetic polyisoprene and natural rubber is used as the conjugated diene-based elastomer.

Other conjugated diene-based elastomers which optionally may be present in minor amounts (e.g., totaling up to 10 phr, or up to 5 phr, or up to 2 phr) may include one or more of butadiene rubber (BR), isoprene-isobutylene copolymer, and halobutyl rubber, e.g., bromobutyl rubber and chlorobutyl rubber.

### Other Vulcanizable Elastomers

Apart from the natural rubber present in the composite material and the conjugated diene-base elastomer, other vulcanizable elastomers may be present in the rubber composition in minor amounts (e.g., totaling up to 10 phr, or up to 5 phr, or up to 2 phr), and may be selected from nitrile rubber, liquid rubbers, polynorbornene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadienestyrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, styrene butadiene copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally comprises a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer, and mixtures thereof.

In one embodiment, the rubber composition is free of such other vulcanizable elastomers.

### Reinforcing Fillers

One or more reinforcing fillers, other than the carbon black found in the composite material, may be present in the rubber composition. Examples of such reinforcing fillers include silica, calcium carbonate (CaCO₃), titanium dioxide, hydrous aluminum silicate clay, 2:1 layered silicate clay and organophilic clay formed therefrom, calcium silicate, graphite, graphene, carbon nanotubes, wollastonite, talc, diatomaceous earth, starch, lignin, alumina, another carbon black, e.g., different from the carbon black present in the composite material, and mixtures thereof.

The reinforcing filler(s) may be present in the rubber composition at from 0 to 150 phr, such as at least 2 phr, or at least 4 phr, or at least 6 phr, or at least 8 phr, or up to 100 phr, or up to 80 phr, or up to 50 phr, or up to 20 phr, or up to 15 phr, up to 10 phr, such as from 5 to 15 phr.

In one embodiment, the reinforcing filler includes or consists of silica particles, such as amorphous (e.g., precipitated) silica and/or crystalline silica. The term "silica" is used herein to refer to silicon dioxide, SiOz (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent.

Silica may be present in the rubber composition in an amount of at least 2 phr, or at least 4 phr, or at least 6 phr, or at least 8 phr, or up to 100 phr, or up to 80 phr, or up to 50 phr, or up to 20 phr, or up to 18 phr, or up to 15 phr, up to 10 phr, such as from 5 to 15 phr.

The silica may be prepared by various methods. Precipitated silica may be prepared by digesting amorphous silica, e.g., found in rice husks or other biological wastes, with sodium hydroxide to form sodium silicate and precipitating silica from the sodium silicate by reaction with an acidifying agent, such as sulfuric acid or carbon dioxide. The resulting silica precipitate is washed and filtered. Methods for the preparation of precipitated silica are disclosed, for example, in U.S. Pat. Nos. 5,587,416 A, 5,800,608 A, 5,882,617 A, and 9,359,215 B2, and U.S. Pub. Nos. 20020081247 A1, and 20050032965 A1. Precipitated silica may also be formed from silica gel as described, for example, in U.S. Pat. Nos. 5,708,069, 7,550,610, and 5,789,514. Silica gels may be derived, for example, by hydrophobating a silica hydrogel with, for example, an organomercaptosilane and alkyl silane and drying the product.

Various methods are available for determining surface area of silica. In the test method of ASTM D6845-20 "Standard Test Method for Silica, Precipitated, Hydrated-CTAB (Cetyltrimethylammonium Bromide) Surface Area," the measurement of the specific surface area of the silica is exclusive of area contained in micropores too small to admit CTAB molecules. This test method is suitable for characterizing rubber-grade silicas of all types.

The silica used in the reinforcing filler may have a CTAB specific surface area, according to ASTM D6845-20, of at least 120 m²/g, or at least 140 m²/g, or at least 220 m²/g, or at least 240 m²/g. The silica may have a CTAB specific surface area of up to 500 m²/g, or up to 400 m²/g, or up to 300 m²/g.

Example precipitated silicas suited to use herein include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 6000GR, 7000GR, and 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd, and mixtures thereof.

In one embodiment, silica is present in the rubber composition at 1 phr or more, such as at least 2 phr, or at least 5 phr, or at least 6 phr, or at least 7 phr, or up to 20 phr, or up to 18 phr, or up to 15 phr, or up to 14 phr, or up to 12 phr, or up to 10 phr. The silica may be at least 2 phf, or at least 4 phf, or at least 8 phf, or at least 12 phf, or up to 25 phf, or up to 20 phf, or up to 18 phf of the reinforcing fillers.

In one embodiment, a ratio of silica to total elastomer (e.g., natural rubber), by weight, in the rubber composition is at least 4:100, or at least 6:100, and may be up to 20:100, or up to 15:100.

In one embodiment, a ratio of silica to carbon black, by weight, in the rubber composition is at least 4:100, or at least 7:100, or at least 12:100, or at least 15:100 and may be up to 3:10, or up to 2:10.

In one embodiment, the silica may have been surface treated, e.g., with a coupling agent and/or a polyalkylene oxide, such as polyethylene glycol, prior to incorporating the pretreated silica into the rubber composition. The pretreatment may serve to enhance dispersion and/or adherence of the silica to the elastomers. In another embodiment, the silica may be treated in situ, within the rubber composition, generally prior to addition of the curing agent, with a coupling agent and/or polyalkylene oxide.

Polyalkylene glycols which may be used for silica pretreatment or in situ in the rubber composition include polyethylene glycol, polypropylene glycol, and mixtures thereof. In one embodiment, the polyalkylene oxide is polyethylene glycol. The polyalkylene oxide may have a weight average molecular weight Mw of at least 500, such as at least 2,000, or at least 4,000, or up to 15,000, or up to 12,000, or up to 10,000, or up to 8,500. Polyalkylene oxide may be absent from the rubber composition. In cases where polyalkylene oxide, e.g., polyethylene glycol, is utilized, it may be included in an amount of at least 0.1 phr, such as at least 0.2 phr, or at least 0.3 phr, or up to 5 phr, or up to 3 phr, or up to 2 phr, or up to 1 phr, or up to 0.6 phr.

Examples of commercially available polyethylene glycols include Carbowax^{™} PEG 3350 and Carbowax^{™} PEG 8000 from the Dow Chemical Company where the number indicates an approximate weight average molecular weight. Other polyalkylene oxide polymers may be used, as described, for example, in U.S. Pat. Nos 6,322,811 and 4,082,703.

Suitable coupling agents generally include a first moiety, which is reactive with hydroxyl groups (e.g., silanol groups) that are present on the surface of precipitated silica, and a second moiety capable of reacting with a diene-based elastomer, such as the exemplary natural rubber. The two moieties are connected by a linking group, e.g., a hydrocarbyl or sulfidic bridge, such that the precipitated silica is chemically bonded to the elastomer. Examples of silica coupling agents include those containing groups such as alkyl, alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof. The silica coupling agent may be present in an amount sufficient to provide a ratio of the total amount of coupling agent to silica filler of at least 0.1:100 or up to 1:5, by weight, e.g., a ratio of at least 1:100, or at least 1:50, or up to 1:20, or up to 1:10.

Additional reinforcing fillers, other than the silica and the carbon black, may be utilized, e.g., in total amounts of up to 30 phr, or up to 20 phr, or up to 10 phr, or up to 1 phr, or may be absent. Examples of such additional reinforcing fillers include alumina, aluminum hydroxide, clay (reinforcing grades), magnesium hydroxide, boron nitride, aluminum nitride, titanium dioxide, reinforcing zinc oxide, and combinations thereof.

In one embodiment, components of the rubber composition, other than the natural rubber, carbon black, and silica, are present in the rubber composition in a total amount of no more than 40 phr, or no more than 30 phr, or no more than 20 phr, or no more than 15 phr.

### Processing aids

Processing aids may be used in the rubber composition at a total of 1 to 20.0 phr, or up to 10 phr, or up to 5 phr, and may include one or more of a resin and a liquid plasticizer, such as an oil.

Example resins which may be used in the rubber composition include tackifying resins, such as unreactive phenol formaldehyde, and stiffness resins, such as reactive phenol formaldehyde resins and resorcinol or resorcinol and hexamethylene tetramine, benzoxazine resins, hydrocarbon resins, such as aromatic, aliphatic, and cycloaliphatic resins.

Example hydrocarbon resin may have a Tg of at least 30°C, or up to 50°C. Hydrocarbon resin Tg can be determined by DSC, according to the procedure discussed above for elastomer Tg measurements. The hydrocarbon resin may have a softening point of at least 70°C, or up to 100°C. The softening point of a hydrocarbon resin is generally related to the Tg. The Tg is generally lower than its softening point, and the lower the Tg the lower the softening point.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof.

Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic.

Specific examples of aromatic resins include coumarone-indene resins, alkylphenol resins, and vinyl aromatic homopolymer or copolymer resins. Examples of alkylphenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinyl naphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinyl aromatic/aliphatic copolymer resins (e.g., CPD/styrene copolymer resin, and DCPD/styrene copolymer resin).

In the case of an aromatic resin based upon one or more of the above-mentioned vinyl aromatic monomers (e.g., styrene, alpha-methylstyrene), at least 80% by weight, or at least 85% by weight, or at least 90% by weight, or at least 95% by weight, or up to 100% by weight of the monomers in the aromatic resin may be aromatic monomers.

Other aromatic resins include terpene resins, such as alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof.

In one embodiment, the hydrocarbon resin includes a combination of aromatic and aliphatic/cycloaliphatic hydrocarbons. In such cases, the total amount of any aliphatic and/or cycloaliphatic resin used in combination with the aromatic resin may be no more than 5 phr, or less than 4 phr, or less than 3 phr, or more than 20% by weight, or no more than 15% or no more than 10% by weight of the overall amount of hydrocarbon resins).

The aromatic resin may have a Mw of at least 1000 grams/mole and/or up to 4000 grams/mole.

A total amount of resin in the rubber composition may be at least 1 phr, or at least 2 phr, or up to 20 phr, or up to 10 phr, or up to 5 phr, or may be absent.

The term liquid plasticizer is used to refer to plasticizer ingredients which are liquid at room temperature (i.e., liquid at 25°C and above) and includes oils and non-oils. Hydrocarbon resins, in contrast to liquid plasticizers, are generally solid at room temperature. Generally, liquid plasticizers will have a Tg that is below 0°C, generally well below, such as less than -30°C, or less than -40°C, or less than -50°C, such as a Tg of 0°C to -100°C.

Suitable liquid plasticizers include oils (e.g., petroleum oils as well as plant-sourced oils) and non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). Petroleum based oils may include aromatic, naphthenic, low polycyclic aromatic (PCA) oils, and mixtures thereof. Plant oils may include oils harvested from vegetables, nuts, seeds, and mixtures thereof, such as triglycerides. The Tg of the oil or oils used may be -40°C to -100°C.

When present, the rubber composition may include at least 1 phr of liquid plasticizer, or up to 20 phr, or up to 10 phr, or up to 5 phr of liquid plasticizer. In one embodiment, no liquid plasticizer is employed.

In addition to one or more of the above processing aids, the rubber composition may include a peptizer, such as pentachlorothiophenol, dibenzamidodiphenyl disulfide, or a mixture thereof. Typical amounts of peptizer, if used, may be 0.1 phr to 1 phr.

### Antidegradants (Antioxidants, Antiozonants)

The rubber composition may include one or more antidegradants, such as antiozonants and/or antioxidants. These compounds assist in protecting the tire against oxidation and ozonation. Representative antidegradants include amine based antioxidants, such as monophenols, bisphenols, thiobisphenols, polyphenols, polymeric hindered phenols, hydroquinone derivatives, phosphites, phosphate blends, thioesters, naphthylamines, diphenol amines as well as other diaryl amine derivatives, para-phenylene diamines (PPDs), quinolines, and blended amines. Exemplary amine-based antioxidants include diphenyl-p-phenylenediamine, N-(1,3-dimethylbutyl)-N'-phenyl-p-phenylenediamine (6PPD), oligomerized 2,2,4-trimethyl-quinoline (TMQ), and others, such as those disclosed in The Vanderbilt Rubber Handbook (1978), pages 344-347. Antioxidants may be at least 0.1 phr, or at least 0.3 phr, or at least 1 phr, or at least 2 phr, or up to 10 phr, or up to 5 phr of the rubber composition.

Exemplary antiozonants include physical protectants such as waxes. Suitable waxes include paraffin waxes and microcrystalline waxes, which may be of the type described in The Vanderbilt Rubber Handbook (1978), pp. 346 and 347. The wax(es) may be present at 0.1 phr, or more, such as at least 0.3 phr, or at least 0.5 phr, or up to 5 phr, or up to 2 phr.

### Cure Package

### Vulcanizing Agent

The exemplary cure package includes a vulcanizing (cure) agent and one or more of a cure accelerator, a cure activator, and a cure inhibitor. The cure package may be used in the rubber composition at 0.5 to 20 phr, or at least 5 phr, or up to 10 phr.

The vulcanization of the rubber composition may be conducted in the presence of a sulfur-based vulcanizing agent. Examples of suitable sulfur-based vulcanizing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur vulcanizing agents may be used in an amount of from 0.1 to 10 phr, such as at least 0.3 phr, or at least 0.4 phr, or at least 0.5 phr, or at least 0.7 phr, or up 5 phr, or up to 3 phr in the rubber composition.

### Cure Accelerators, Cure Activators, Cure Retardants

Cure accelerators act as catalysts for the vulcanization agent. Suitable cure accelerators include amines, disulfides, guanidines, thioureas, thiazoles, thiurams, sulfenamides, dithiocarbamates and xanthates. Examples of thiazole cure accelerators include 2-mercaptobenzothiazole and 2,2'-dithiobis(benzothiazole) (MBTS). Examples of sulfenamide cure accelerators include benzothiazole sulfenamides, such as N-cyclohexyl-2-benzothiazolesulfenamide (CBS), and N-tert-butyl-2-benzothiazolesulfenamide (TBBS). Guanidine cure accelerators include diphenyl guanidine (DPG).

Cure accelerators having a fast vulcanization initiation time, referred to as "t0," of less than 3 minutes are referred to as ultra-accelerators. Example ultra-accelerators which may be used include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

In some cases, a combination of accelerators is used, with one acting faster than the other.

The cure accelerator may be incorporated in the rubber composition at from 0.1 to 10 phr, or at least 0.5 phr, or at least 1 phr, or at least 2 phr, or up to 8 phr, or up to 5 phr. The amount of cure accelerator may be selected to provide an acceptable cure time, such as under 90 minutes.

Cure activators are additives which are used to support vulcanization. Cure activators include both inorganic and organic cure activators. Zinc oxide is a widely used inorganic cure activator and, when used, may be present at 1 phr to 10 phr, e.g., at least 2 phr, or up to 5 phr.

Organic cure activators include stearic acid, palmitic acid, lauric acid, mixtures thereof, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylene-thiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea. One commonly used organic cure activator is a blend of stearic, palmitic, and oleic acid, with stearic acid being a major component of the blend.

The total amount of organic cure activator(s), when used, may be from 0.1 to 6 phr, such as at least 0.5 phr, or at least 1 phr, or up to 4 phr.

Cure retardants are used to control the vulcanization process and generally retard or inhibit vulcanization until the desired time and/or temperature is reached. Example cure retardants include cyclohexylthiophthalimide.

The amount of cure retardant, when used, may be at least 0.1 phr, or up to 3 phr, or up to 2 phr.

### Example Compositions

TABLE 1 illustrates exemplary rubber compositions in accordance with aspects of the exemplary embodiment.

**TABLE 1: Example Rubber Compositions**

| Component | Example 1 (phr) | Example 2 (phr) |
|---|---|---|
| Composite Material | 30-160 | 100-160 |
| Conjugated Diene elastomer, e.g., Natural Rubber, in composite material | 50-95 | 70-90 |
| Additional Conjugated Diene elastomer, e.g., Natural Rubber | 5-50 | 10-30 |
| Other vulcanizable elastomers | 0-10 | 0-5 |
| Reinforcing Carbon Black in composite material | 20-80 | 30-55 |
| Silica | 0-18 | 5-12 |
| Resins, waxes, and oils | 0.1-10 | 1-5 |
| Organic cure activators (e.g., fatty acid(s)) | 0.5-10 | 1-5 |
| Inorganic cure activator, e.g., zinc oxide | 0-7 | 0-4 |
| Antidegradants | 0.1-10 | 2-5 |
| Sulfur-based cure agent, e.g., elemental sulfur | 0.3-5 | 1-3 |
| Cure accelerator, e.g., sulfenamide or guanidine | 0.5-2.5 | 0.7-1.5 |
| Cure retardant | 0-1 | 0.05-0.5 |
| Other components | 0-20 phr | 0-10 phr |

### Preparation of the Rubber Composition

Rubber compositions may be prepared by mixing the composite material, natural rubber and/or where used, other vulcanizable elastomers, silica, and other rubber compounding ingredients, not including the cure agent, in at least one sequential mixing stage with at least one mechanical mixer, usually referred to as the "non-productive" mixing stage, or stage(s), to an elevated temperature under high shear rubber mixing conditions, followed by a final "productive" mixing stage, in which a sulfur-based cure package, such as a sulfur-based cure agent and cure accelerators, is added to the mixture and mixed at a lower mixing temperature to avoid unnecessarily pre-curing the rubber mixture during the mixing stage.

The ingredients may be mixed in the non-productive mixing stage(s) for a few minutes to a temperature of 115°C to 150°C, e.g., 124°C. Once the cure package is added, the subsequent productive mixing step may be conducted at a temperature below the vulcanization (cure) temperature in order to avoid unwanted pre-cure of the rubber composition, e.g., less than 180°C, or no more than 160°C, or no more than 120°C, such as at least 40°C, or at least 60°C, e.g., for 2 minutes at a temperature of 100-115°C. Mixing may be performed, for example, by kneading the ingredients together in a Banbury mixer or on a mill roll. The rubber composition may be cooled to a temperature below 40 °C between each of the mixing stages. For example, the rubber composition may be dumped from the mixer after each mixing step, sheeted out from an open mill and allowed to cool to below 40°C after each mixing step.

When the cure package is thoroughly mixed, the rubber composition may be extruded, molded, or otherwise shaped to form an article, such as a tire tread. The temperature of the mixture may be raised to effect cure. Curing of the pneumatic tire or part thereof may be carried out at a temperature of from 120°C to 200°C, e.g., at least 140°C, or up to 180°C, or 150°C. Any of the usual vulcanization processes may be used, such as heating in a press or mold, or heating with superheated steam or hot air. Such tires can be built, shaped, molded, and cured by various methods which are known and will be readily apparent to those having skill in such art.

In one embodiment, a tire is provided, the tire having a tread formed, at least in part, from the exemplary rubber composition. Other parts of the tire, such as the tire sidewalls, or wire coatings, may additionally, or alternatively, be formed, at least in part, from a rubber composition as described herein. The tire may be a pneumatic tire for an on-the-road vehicle, such as an automobile or truck, or a tire for an off-road vehicle, airplane, or the like. The tire tread may have a tread depth of at least 20 mm, e.g., 22-28 mm, which is suitable for use in a truck.

The rubber composition is not limited to use in tires but may find application in rubber gloves, surgical instruments, and the like.

### Properties of Articles

The use of the rubber composition in tires, such as in tire treads, may result in a tire having improved or desirable tread properties. These improved or desirable properties may include tear resistance and elongation at break. The rubber composition can also yield improvements in properties in wire coatings and base formulations.

These improvements have been demonstrated, in part, through laboratory studies, plant-scale trials and field evaluations with a commercial composite material, E2C^{™} DX9640 from Cabot Corporation. Replacement of part of the natural rubber in rubber compositions with the composite natural rubber and carbon black material can significantly enhance compound properties beneficial for improved mileage (in particular, stiffness and abrasion resistance).

The following examples illustrate preparation of the exemplary rubber compositions employing a composite material and properties thereof.

### EXAMPLES

Table 1. Tire tread cap formulations are prepared with the aim of achieving comparable or better tread wear (as indicated by the Grosch test for medium radial truck (MRT) tires), an improved rolling resistance (as indicated using the Rebound at 100°C) and comparable or better tear resistance (as indicated by Original and aged Strebler adhesion at 100°C) when the composite material is employed. Tire base and wire coat formulations ate also prepared which aim to achieve rolling resistance and tear resistance.

### EXAMPLE 1

Rubber compositions suited to use in tire tread caps for trucks are prepared using the formulations shown in TABLE 2.

Examples A, B, and C are prepared using carbon black ASTM grade N121 and natural rubber and none of the composite material. Example A is formulated as a baseline tread composition suited to use in medium truck radial tires. Example B adds silica to the baseline composition and Example C uses a modified cure package.

For these three examples, in a first mixing stage, natural rubber is mixed with a portion of the carbon black (30phr) until the mixture reaches 160°C. It is then dropped from the mixer and allowed to cool. In a second mixing stage, the remainder of the carbon black (18 phr), silica if used, waxes, and antioxidants are added. In the productive mixing stage, sulfur, accelerator, and cure retardant are added and the mixture dropped from the mixer at a temperature which is below the curing temperature.

Examples D, E, and F are prepared using both natural rubber and the composite material (a material containing approximately 64.5 wt.% natural rubber and 35.5 wt.% carbon black). The amount of carbon black and natural rubber in these three compositions are approximately the same as in the baseline formulations A, B, and C. Each of these examples uses silica. Example E uses a modified cure package and Example F uses a higher surface area silica than for examples D and E.

To prepare examples D, E, and F, in a single non-productive stage, the composition is mixed until the temperature reaches 124°C and dropped from the mixer. In the productive stage, sulfur, accelerator, and cure retardant are added and the mixture composition is mixed in the mixer until it reaches 104°C and dropped from the mixer. The rotor speed is maintained constant at 50 rpm during this stage. Mixing at cooler temperatures in the non-productive and productive stages helps to preserve polymer-filler networks in the composite material, and, thus, maintain performance indicators. In the curing stage, the rubber composition is heated to a temperature of 150°C for 32 minutes.

**TABLE 2: Rubber Composition Formulations (in phr)**

| **Component** | **Ex. A** | **Ex. B** | **Ex. C** | **Ex. D** | **Ex. E** | **Ex. F** |
|---|---|---|---|---|---|---|
| Composite material¹ | 0 | 0 | 0 | 132.45 | 132.45 | 132.45 |
| Natural Rubber (in composite material) | 0 | 0 | 0 | 85.45 | 85.45 | 85.45 |
| Carbon black (in composite material) | 0 | 0 | 0 | 47 | 47 | 47 |
| Natural Rubber (additional) | 100 | 100 | 100 | 14.55 | 14.55 | 14.55 |
| Carbon Black (loose)² | 48 | 47 | 47 | 0 | 0 | 0 |
| Silica | 0 | 8³ | 8³ | 8³ | 8³ | 8⁴ |
| Wax⁵ | 1.5 | 1.5 | 1.5 | 1.5 | 1.5 | 1.5 |
| Stearic Acid⁶ | 2 | 2 | 2 | 2 | 2 | 2 |
| Antioxidant and Antiozonant⁷ | 3 | 3 | 3 | 3 | 3 | 3 |
| Sulfur⁸ | 1.5 | 1.5 | 2.07 | 1.88 | 2.07 | 1.88 |
| Accelerator⁹ | 1.03 | 1.03 | 1.13 | 1.03 | 1.13 | 1.30 |
| Cure retardant¹⁰ | 0.1 | 0.18 | 0.28 | 0.18 | 0.28 | 0.28 |
| Total phr | 157.13 | 164.21 | 164.98 | 164.59 | 164.98 | 164.96 |

| | | | | | | |
|---|---|---|---|---|---|---|
| ¹ E2C^{™} DX9640 carbon black master batch from Cabot Corporation ² Carbon black ASTM N121 from Birla Carbon ³ Amorphous precipitated silica, ULTRASIL^{®} 6100 GR from Evonik, having a BET nitrogen surface area of about 160 m²/g. ⁴ Amorphous precipitated silica, obtained as Premium SW from Solvay, with a CTAB surface area of about 250 m²/g. ⁵ Blend of microcrystalline and paraffin waxes. ⁶ Primarily stearic acid (at least 90% stearic acid) as a blend of stearic, palmitic, and oleic acids. ⁷ Blend of para-phenylene diamines and quinolines. ⁸ Elemental sulfur. ⁹ N-tert-butyl-benzothiazolesulfenamide (TBBS). ¹⁰ N-(cyclohexylthio)phthalimide (CTP). | | | | | | |

Performance tests were performed on the cured samples, as follows:
Specific gravity: determined according to ASTM D297-21, "Standard Test Methods for Rubber Products-Chemical Analysis."
Cured stiffness: The storage modulus G' is determined with a Rubber Process Analyzer (RPA 500). Storage modulus values are measured on uncured samples at 10 % strain, and after cure at 10% and 50% strain (in MPa), at a temperature of 40°C. The measurements on cured samples are indicative of the ride and handling of a tire using the rubber composition in the tread. tan Δ values (the ratio of G" to G') at 10% strain are also obtained.
Tensile properties: Ring tensile modulus at 300% strain (MPa) for samples before and after aging, Tensile strength, MPa, and elongation at break, %, are measured with an Instron Corporation instrument.
Rolling resistance predictor: Percentage Rebound is measured on the cured sample as an indicator of the wet braking capability of the tire, with a ZwickRoell 5109 Rebound Resilience Tester at a given temperature, in accordance with ASTM D7121-05(2018), "Standard Test Method for Rubber Property-Resilience Using Schob Type Rebound Pendulum," with higher values being better. Rebound is a measure of hysteresis of the compound when subject to loading, Generally, the higher the measured rebound, the lower the rolling resistance.

Strebler Adhesion Steady State Average Load to itself is determined at 100°C (N/mm) on cured samples, before and after aging. This is a peel test which determines interfacial adhesion by pulling one rubber composition away from the other at a right angle to the untorn test specimen with the two ends of the rubber compositions being pulled apart at a 180° angle to each other.

Crack Growth: DeMattia cut growth (mm/min) is determined at 95°C on aged samples in accordance with ASTM D813-07(2019), "Standard Test Method for Rubber Deterioration-Crack Growth." In Table 3, the higher the cut growth rate, the greater the resistance of the tread groove to surface crack growth.

Abrasion Resistance: indicative of tread wear, is determined as the Grosch abrasion rate, in terms of mg/km of rubber abraded away. The test rubber sample is placed at a slip angle under constant load (Newtons) as it traverses a given distance on a rotating abrasive disk. Medium and high abrasion severity tests are run. The primary differences between these two tests are with respect to load and slip angle. The high severity Grosch is an average of two samples run at 70N of load at a 12-degree angle, while the medium severity is an average of two tests at 70N and 40N of load and 12- and 6-degree angles, respectively.

Results are shown in TABLE 3. The results are normalized, with those for Example A being set to 100. Higher is generally better for all parameters.

**TABLE 3: Results**

| **Test** | **Ex. A** | **Ex. B** | **Ex. C** | **Ex. D** | **Ex. E** | **Ex. F** |
|---|---|---|---|---|---|---|
| **Material incorporation** | | | | | | |
| Specific gravity | 1.103 | 1.127 | 1.131 | 1.136 | 1.136 | 1.134 |

| **Processability** | | | | | | |
|---|---|---|---|---|---|---|
| RPA 500 G' uncured at 0.83 Hz | 100 | 89 | 98 | 70 | 68 | 72 |

| **Dynamic modulus** | | | | | | |
|---|---|---|---|---|---|---|
| RPA 500 G' cured at 10% strain | 100 | 109 | 111 | 92 | 99 | 90 |
| RPA 500 G' cured at 50% strain | 100 | 106 | 110 | 95 | 102 | 94 |

| **Tensile properties** | | | | | | |
|---|---|---|---|---|---|---|
| Ring tensile modulus at 300% strain, MPa | 100 | 101 | 107 | 106 | 113 | 95 |
| Tensile strength, MPa | 100 | 94 | 98 | 112 | 99 | 102 |

| **Heat generation** | | | | | | |
|---|---|---|---|---|---|---|
| Zwick Rebound at 100° C | 100 | 99 | 103 | 106 | 110 | 104 |
| RPA 500 tan (d) at 10% strain | 100 | 95 | 100 | 95 | 114 | 114 |

| **Elongation** | | | | | | |
|---|---|---|---|---|---|---|
| Ring MTE - Elongation at break, % | 100 | 96 | 95 | 96 | 90 | 105 |

| **Tear Resistance** | | | | | | |
|---|---|---|---|---|---|---|
| Strebler SS avg. load/mm (at 100°C) | 100 | 133 | 112 | 131 | 116 | 140 |
| Aged Strebler SS avg. load/mm (at 100°C) | 100 | 143 | 121 | 160 | 125 | 156 |

| **Crack-growth resistance** | | | | | | |
|---|---|---|---|---|---|---|
| Aged DeMattia crack growth rate | 100 | 100 | 128 | 133 | 100 | 135 |

| **Abrasion resistance** | | | | | | |
|---|---|---|---|---|---|---|
| Grosch Abrasion rate (low severity) | 100 | 89 | 85 | 92 | 89 | 94 |
| Grosch Abrasion rate (high severity) | 100 | 104 | 104 | 103 | 106 | 91 |

| **Wet traction** | | | | | | |
|---|---|---|---|---|---|---|
| Zwick Rebound at 0° | 100 | 108 | 104 | 100 | 96 | 98 |

| **Filler dispersion** | | | | | | |
|---|---|---|---|---|---|---|
| **Test** | **Ex. A** | **Ex. B** | **Ex. C** | **Ex. D** | **Ex. E** | **Ex. F** |
| Ratio of modulus at 300% strain to modulus at 100% strain | 100 | 96 | 95 | 112 | 107 | 116 |

The results in Table 3 indicate that Examples, D and E had higher aged Strebler adhesion values and better abrasion resistance at high severity, at reduced medium-severity abrasion resistance. This improved balance on performance indicators was achieved by using the composite material to replace some of the natural rubber in the formulation. Example F showed a similar improvement in Strebler values as Examples D and E, with trade-offs in abrasion resistance at low and high severity.

Example E is identical to Example D, except that it includes slightly less sulfur, accelerator, and cure retardant. Compared to Example A, Example E delivered a 10% improvement in rolling resistance indicator, while also improving compound tear resistance indicator and Grosch abrasion resistance at high severity, and maintaining stiffness and elongation at break values within general guidelines for line haul drive applications.

An increase in percent dispersion based on higher 300% to 100% tensile modulus ratio (i.e., better filler-polymer interaction) was observed in the samples containing the composite material. An additional non-productive mixing step could further improve dispersion and processing indicator in this case.

### EXAMPLE 2

Rubber compositions suited to use as a tire tread base for trucks are prepared using the formulations shown in TABLE 4.

Examples G, H, and I are prepared using carbon black ASTM grade N347 and natural rubber and none of the composite material. Example G is formulated as a baseline tread base composition suited to use in medium truck radial tires. Example H partially replaces carbon black with silica, compared to the baseline composition, and Example I uses a modified cure package.

For these three examples, in a first mixing stage, natural rubber is mixed with a portion of the carbon black (up to 17.1 phr), silica (up to 9.7 phr), oil and cure activators until the mixture reaches 155°C. It is then dropped from the mixer and allowed to cool. In a second mixing stage, silica (up to 5.5 phr) and silane are mixed up to a temperature of 145 °C. After cooling, the remainder of the carbon black (up to 5 phr), silica (up to 1.8 phr), waxes, and antioxidants are mixed in a third mixing stage. In the productive mixing stage, sulfur, accelerator, and cure retardant are added and the mixture dropped from the mixer at a temperature below the curing temperature.

Examples J and K are prepared using both natural rubber and the composite material (a material containing approximately 64.5 wt.% natural rubber and 35.5 wt.% carbon black). The amounts of carbon black and natural rubber in these three compositions are approximately the same as in the baseline formulations G, H, and I. Each of these examples use silica. Example K uses the same cure package as Example I.

To prepare Examples J and K, the first non-productive stage is similar to the first non-productive for Examples H and I. The difference is in the lower natural rubber amount in the first non-productive stage for Examples J and K. The second non-productive stage for Examples J and K corresponds to that of Examples H and I. In the third non-productive stage, the composite material is added in Examples J and K, along with the remaining amount of silica (1.8 phr) and weathering protection agents, and mixed until the temperature reaches 124°C. In the productive stage, sulfur, accelerator, and cure retardant are added and the mixture composition is mixed in the mixer until it reaches 104°C and dropped from the mixer. The rotor speed is maintained constant at 50 rpm during this stage. In the curing stage, the rubber composition is heated to a temperature of 150°C for 32 minutes.

**TABLE 4:Rubber Composition Formulations (in phr)**

| **Component** | **Ex. G** | **Ex. H** | **Ex. I** | **Ex. J** | **Ex. K** |
|---|---|---|---|---|---|
| Composite material¹ | 0 | 0 | 0 | 48.2 | 48.2 |
| Natural Rubber (in composite material) | 0 | 0 | 0 | 31.1 | 31.1 |
| Carbon black (in composite material) | 0 | 0 | 0 | 17.1 | 17.1 |
| Natural Rubber (additional) | 90 | 90 | 90 | 58.9 | 58.9 |
| Synthetic Polyisoprene (additional) | 10 | 10 | 10 | 10 | 10 |
| Carbon Black (loose)² | 20 | 17.1 | 17.1 | 0 | 0 |
| Silica³ | 13.5 | 16.4 | 16.4 | 16.4 | 16.4 |
| Silica Coupler | 1.36 | 1.36 | 1.36 | 1.36 | 1.36 |
| Oil | 1.8 | 1.8 | 1.8 | 1.8 | 1.8 |
| Stearic Acid⁴ | 1 | 1 | 1 | 1 | 1 |
| Antioxidant and Antiozonants | 3.5 | 3.5 | 3.5 | 3.5 | 3.5 |
| Sulfur⁶ | 3.13 | 3.13 | 3.92 | 3.13 | 3.92 |
| Accelerator⁷ | 1.15 | 1.15 | 1.18 | 1.15 | 1.18 |
| Cure retardant⁸ | 0.1 | 0 | 0.1 | 0.06 | 0.16 |
| Total phr | 149.54 | 149.44 | 150.36 | 149.50 | 150.42 |

| | | | | | |
|---|---|---|---|---|---|
| ¹ E2C^{™} DX9640 carbon black master batch from Cabot Corporation ² Carbon black ASTM N347 from Orion Engineered Carbons ³ Amorphous precipitated silica, ULTRASIL^{®} 6100GR from Evonik ⁴ Primarily stearic acid (at least 90% stearic acid) as a blend of stearic, palmitic, and oleic acids. ⁵ Blend of para-phenylene diamines and quinolines. ⁶ 80% Oil-treated Sulfur (90% insoluble) ⁷ N-tert-butyl-benzothiazolesulfenamide (TBBS). ⁸ N-(cyclohexylthio)phthalimide (CTP). | | | | | |

Results for these formulations are shown in TABLE 5.

**TABLE 5: Results**

| **Test** | **Ex. G** | **Ex. H** | **Ex. I** | **Ex. J** | **Ex. K** |
|---|---|---|---|---|---|
| **Material incorporation** | | | | | |
| Specific gravity | 1.086 | 1.090 | 1.092 | 1.090 | 1.093 |

| **Processability** | | | | | |
|---|---|---|---|---|---|
| RPA 500 G' uncured at 0.83 Hz | 100 | 97 | 97 | 84 | 84 |

| **Dynamic modulus** | | | | | |
|---|---|---|---|---|---|
| RPA 500 G' cured at 10% strain | 100 | 97 | 107 | 108 | 121 |
| RPA 500 G' cured at 50% strain | 100 | 95 | 106 | 106 | 120 |

| **Tensile properties** | | | | | |
|---|---|---|---|---|---|
| Ring tensile modulus at 300% strain, MPa | 100 | 89 | 99 | 105 | 121 |
| Tensile strength, MPa | 100 | 96 | 102 | 106 | 112 |

| **Heat generation** | | | | | |
|---|---|---|---|---|---|
| Zwick Rebound at 100°C | 100 | 97 | 99 | 100 | 102 |
| RPA 500 tan (d) at 10% strain | 100 | 89 | 118 | 115 | 138 |

| **Elongation** | | | | | |
|---|---|---|---|---|---|
| Ring MTE - Elongation at break, % | 100 | 103 | 102 | 99 | 97 |

| **Tear Resistance** | | | | | |
|---|---|---|---|---|---|
| Strebler SS avg. load/mm (at 100°C) | 100 | 129 | 95 | 87 | 70 |
| Aged Strebler SS avg. load/mm (at 100°C) | 100 | 128 | 82 | 106 | 69 |

| **Crack-growth resistance** | | | | | |
|---|---|---|---|---|---|
| Aged DeMattia crack growth rate | 100 | 88 | 77 | 77 | 77 |

| **Heat build-up resistance** | | | | | |
|---|---|---|---|---|---|
| Bose fatigue final time, minutes | 100 | 101 | 121 | 84 | 108 |
| Bose fatigue final temperature, °C | 100 | 99 | 99 | 108 | 115 |
| Bose fatigue final compression, % | 100 | 94 | 89 | 105 | 100 |

| **Dispersion** | | | | | |
|---|---|---|---|---|---|
| Ratio of modulus at 300% strain to modulus at 100% strain | 100 | 103 | 103 | 97 | 98 |

Example K provided improvements in Bose fatigue and RPA 500 tan (d) values, while maintaining results for Strebler, DeMattia, and elongation at break above minimum acceptable values defined in general guidelines for MTR tread base compounds. Improvements on cured stiffness (G') and tensile properties are also observed.

The results of Examples 1 and 2, and other evaluations not reported here, demonstrate improvements in tread wear and tire mileage can be achieved with the exemplary compositions, without significant trade-offs in other parameters, such as tear and rolling resistance/hysteresis that are commonly experienced when modifying rubber compositions. This indicates that the exemplary compositions can expand the "performance triangle" of rolling resistance, tear, and tread wear, thus overcoming challenges commonly faced during development of new compound formulations for tire programs.

## Claims

1. A rubber composition comprising:
at least 20 phr of a composite material comprising a reinforcing carbon black dispersed in natural rubber;
at least 3 phr or at least 5 phr of a conjugated diene elastomer, the composite material and the conjugated diene elastomer together providing at least 90 phr or a total of 100 phr of vulcanizable elastomers in the rubber composition;
a cure activator; and
a sulfur-based cure agent.

2. The rubber composition of claim 1, further comprising a reinforcing filler other than carbon black, the reinforcing filler preferably comprising silica.

3. The rubber composition of claim 2, wherein the rubber composition comprises at least 5 phr of silica.

4. The rubber composition of at least one of the previous claims, wherein the composite material provides the rubber composition with at least 20 phr of reinforcing carbon black in the rubber composition.

5. The rubber composition of at least one of the previous claims, wherein the composite material provides the rubber composition with at least 50 phr of natural rubber in the rubber composition.

6. The rubber composition of at least one of the previous claims, wherein the composite material is solid.

7. The rubber composition of at least one of the previous claims, wherein the conjugated diene elastomer comprises at least one of natural rubber and synthetic polyisoprene.

8. The rubber composition of at least one of the previous claims, wherein the cure activator is selected from the group consisting of fatty acids, zinc oxide, and mixtures thereof.

9. The rubber composition of at least one of the previous claims, further comprising at least 0.1 phr of a processing aid selected from the group consisting of a resin, an oil, and mixtures thereof; and/or further comprising at least 1 phr of at least one of an antioxidant and an antiozonant.

10. The rubber composition of at least one of the previous claims, further comprising at least 0.5 phr of a cure accelerator and/or at least 0.05 phr of a cure retardant.

11. The rubber composition of at least one of the previous claims, wherein the composite material and the conjugated diene elastomer together provide at least 98 phr of the vulcanizable elastomers in the rubber composition.

12. An article formed from the composition in accordance with at least one of the previous claims.

13. The article of claim 12, wherein the article is a tire component or a tire tread.

14. A method of forming a rubber composition, the method comprising the steps of:
providing at least 20 phr of a composite material comprising a reinforcing carbon black dispersed in natural rubber and at least 3 phr or at least 5 phr of a conjugated diene elastomer, and blending said composite material and said conjugated diene elastomer at a temperature of at least 115°C to form a mixture, the mixture optionally further comprising silica; and
thereafter, blending the mixture with a sulfur-based cure agent;
the composite material and the conjugated diene elastomer together providing at least 90 phr or a total of 100 phr of vulcanizable elastomers in the mixture.

15. The method of claim 14, further comprising curing the rubber composition to form a shaped article such as a tire, a tire component or a tire tread.
